# EUROPEAN PATENT SPECIFICATION

(11) **EP 0 454 933 B1**
(45) Date of publication and mention of the grant of the patent: **02.08.1995**
(21) Application number: 90830188.0
(22) Date of filing: 30.04.1990
(51) Int. Cl.: B60P 3/025

(54) **Device for storing and erecting an awning, especially for a street vendor's motor vehicle**
Vorrichtung zum Verstauen und Ausfahren einer Markise, insbesondere für das Kraftfahrzeug eines Strassenhändlers
Dispositif pour stocker et ériger un auvent, en particulier pour un véhicule à moteur de marchant ambulant

(43) Date of publication of application: 06.11.1991
(73) Proprietor: Mancini, Ivo, San Pietro in Trento (Ravenna) (IT); Mancini, Mario, San Pietro in Trento (Ravenna) (IT)
(72) Inventor: Mancini, Ivo, San Pietro in Trento (Ravenna) (IT); Mancini, Mario, San Pietro in Trento (Ravenna) (IT)
(74) Representative: Sassatelli, Franco T., Dr.

(56) References cited:
- EP-A- 0 204 670
- DE-U- 8 004 067

## Description

The invention refers to an automatic collecting device, included into a closed container mounted on the roof of a motor vehicle, for the covering device consisting of a frame, of bearing sticks and of a cloth. Either from the ground or from the cab, the user will controll the opening operation of the covering device for its use as well as its collection with lowest encumbrance and in protected condition. The pedlars have the exigency on the sale point to arrange the covering of a given area looking on one of the two sides of the transport vehicle when stationed, with a view to protect the exposed goods on the sale bench against the atmospheric agents.

At present this is obtained by means of one or more large umbrellas, which in general can be taken out from a container shomehow bound on the car roof, to be opened and someway fitted on the ground.

At the end of the market phase, these umbrellas have to be closed and brought again into the containing means. Operative inconveniences and risks for the pedlar thus result, who as already mentioned must take from and put again on the car roof the covering means. To all that, the precariousness of the umbrella mounted on the ground and put then again into the covering means on the car roof, as well as the limited covering capacities allowed by these means are to be added. Devices are known, as for instance the device described and shown in the EP-A-0 204 670, according to which a container box embodying support means for speedable and foldable awning support arms is taught. It is an object to the present invention to provide a new covering device which uses, like main support for itself, the transport vehicle. Another object is to provide the covering device opening and closing with phases completely automatic controlled.

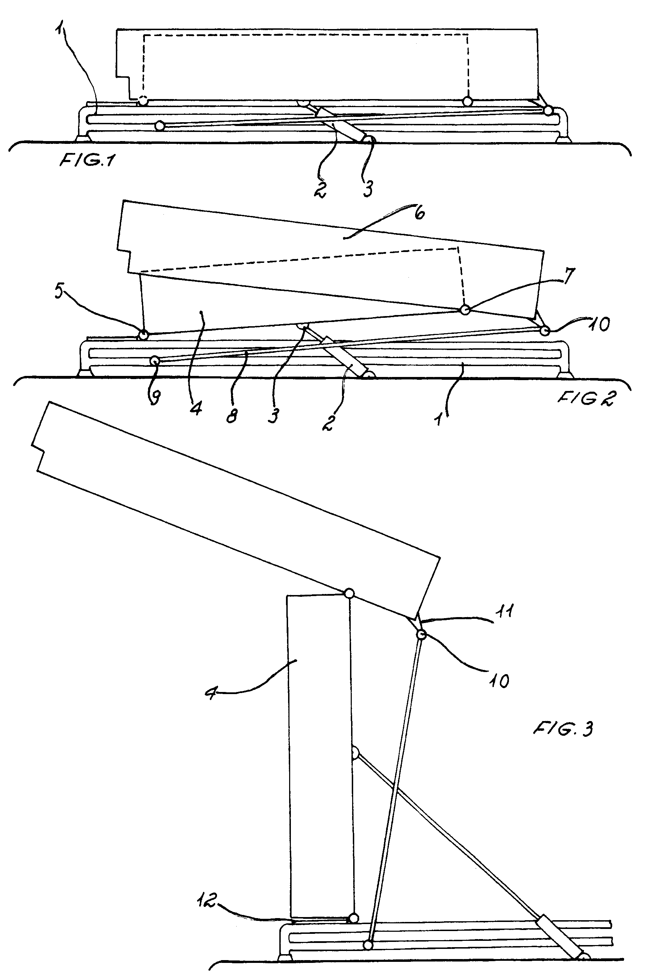

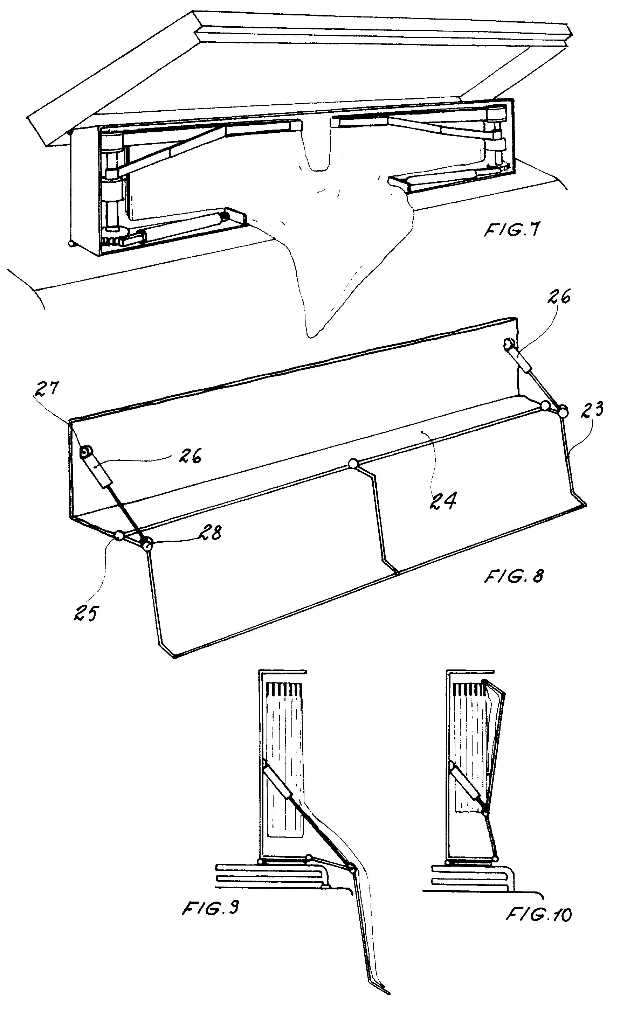

For the invented device placing several operative phases are provided which, as already mentioned, can be controlled either from the cab or from the ground. With the vehicle already on the station point can be actuated: the position change of the container formed by a box and a cover, passing from the spread out closed position for the transport (see fig. 1) to the opened upright one (see fig. 3) for opening the covering device collected with lowest encumbrance into its seat; the opening of the covering device so to bring it on the sale bench and at the end of the sale phase the collecting of the covering device in its seat. The collecting phase is actuated in two sequences: in the first one the two arms and the symmetric sets of sticks for the cloth support re-enter in the seat (see figures 6 and 7) while centrally a part of the cloth is still outboarding, in the second sequence the intervention of lift means brings also the outboarding part of the cloth into the housing seat (see fig. 10). The container is then again brought in spread out closed position on the vehicle roof for the transport. The device is showed in schematic view in the drawings of sheets 1, 2 and 3. Fig. 1 shows the collecting device in closed position over the vehicle roof.

Fig. 2 shows the collecting device in opening phase. Fig. 3 shows the container in opening. Fig. 4 is view in cross section of the collecting device. Fig. 5 is schematic view of the covering device in use condition. Fig. 6 is view of the mechanisms to activate the covering device. Fig. 7 shows the part of cloth still outboarded.

Fig. 8 shows in perspective view the second collecting device. Fig. 9 is cross section view of the second collecting device opened.

Fig. 10 is cross section view of the second collecting device closed.

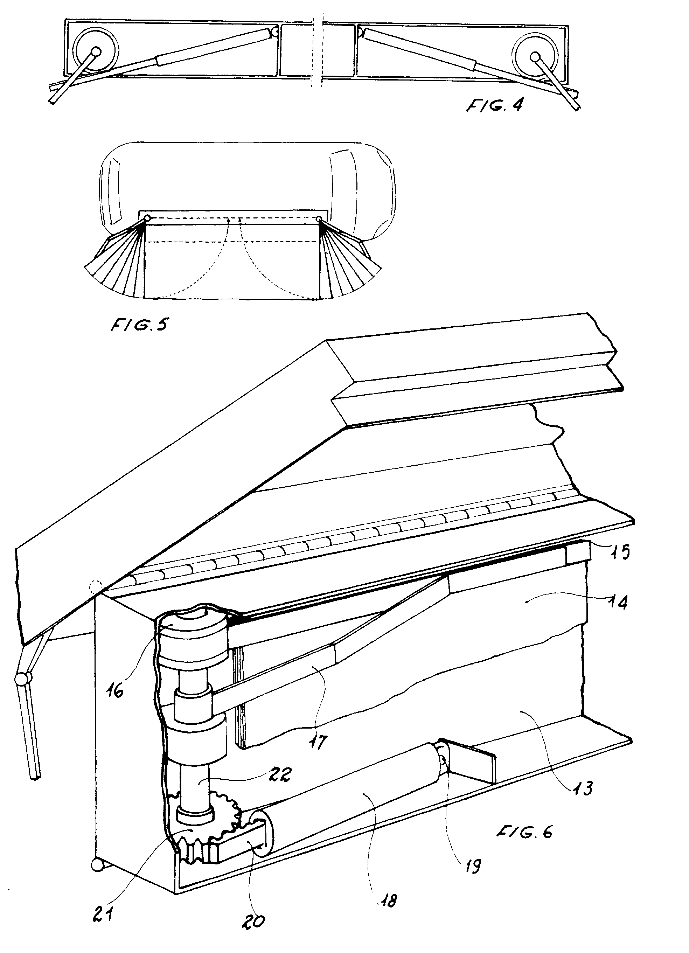

From the closed spread out position (see fig. 1), being integral with the supporting structure 1 mounted on the vehicle roof, the container is gradually opened by the linear actuator 2 on link 3 which lifts the container box 4 rotating on hinge 5. On opposite side of the hinge 5 (see fig. 2) articulated to the container box 4 rotating on hinge 7 the container cover 6 is provided which is therefore lifted by means of two tie rods 8 rotating on links 9. Where the tie rods 8 support the cover 6 by links 10 provided on the outgetting parts 11 of cover 6. At the end of the opening phase, the container box 4 is in upright position and it puts on support base 12 whereas the cover 6 is out of range of the collecting device placed into the housing seat 13 of the box 4 (see fig. 3). From the collecting position for the lowest encumbrance the covering device, consisting of the cloth 14 and of two counterposed sets of supporting sticks 15 mounted on rotating bearing 16 and driven by arms 17 is then brought into use position.

In this opening phase two linear actuators 18 on links 19 start, by means of rack stems 20, the gear wheels 21 of the shaft device 22. Rotating the shaft devices 22 put in rotation the rotating bearings 16 on which the supporting sticks 15 are mounted, therefore opening the cloth 14. At the end of the market activities, the cloth 14 is collected inverted the motion of the rack stems 20 which invert the motion of the shaft devices 22 and therefore the arms 17 do re-enter the two counterposed sets of sticks 15 in the seat 13 of the box 4. Due to the particular counterposed position of the two sets of sticks 15 which rotate in conversion in the collecting phase, an outboarding condition of the cloth 14 centrally occurs (see fig. 7). To allow the complete cloth re-entering into the housing seat 13, a second collecting device is foreseen (see fig. 8) consisting of a mobile frame 23 connected with the fixed part 24 of the container box 4 on links 25. From the lowered position two linear actuators 26 integral on links 27 to the fixed part 24 and on links 28 to the mobile frame 23 bring in raising rotation the mobile frame 23 so collecting the outboarding part of the cloth 14 into the housing seat 13. Referring now in more detail to the application drawings in sheet 1 fig. 1 is view of the collecting device when closed. In this condition, the device is put into the container and the container is in spread out closed condition on the supporting structure 1 mounted on the vehicle roof. Fig. 2 is view of the same container of fig. 1 in an intermediate phase to point out the system of connections which determine the position change of the two components of the container: the container box 4 and the container cover 6. Fig. 3 is view of the opened container.

Referring to sheet 2 fig. 4 is partial view in cross section of the collecting device to show the two mechanisms determining the use of the covering device. Fig. 5 is schematic view from above showing the whole operating assembly consisting of the vehicle with the covering device in use condition. Fig. 6 is opened perspective view of the cover 6 and of the box 4 to show one of the mechanisms activating the covering device. Referring to sheet 3 fig. 7 is view of the covering device collected by means of the re-enter of arms 17 into the housing seat 13 to show the outboarding part of cloth 14 outboarded from the container box 4. Fig. 8 is perspective view of the collecting device which determines the re-enter of the above remaining outboarding part of cloth 14. Fig. 9 is cross section of the above device with frame 23 opened. From this figure the outboarding part of the cloth 14 can be noted put on frame 23. Fig. 10 is view of the same figure with frame 23 closed.

## Claims

1. Device for storing and erecting an awning, especially for a street vendor's motor vehicle foreseen, solidarily with the supporting strucutre (1) mounted on the vehicle roof, a container box (4) gradually opened by a linear actuator (2) on link (3) which puts in elevation the container box (4) by rotation on its hinge (5) and foreseen into the container box (4) a cloth (14) supported by two counterposed systems of supporting sticks (15) mounted on rotating bearings (16); characterized in that:
- the cover (6), articulated with the container box (4) by means of hinge (7), is opened by two tie rods (8) on links (9) which support the cover (6) on links (10) fitted on the top of the outgetting parts (11);
- the container box (4) leans on support base (12) whereas the cover (6) is out of the operative range of the collection device fitted into the housing seat (13);
- the cloth (14) is brought into use position by two linear actuators (18) on links (19) which, by means of rack stems (20), start the gear wheels (21) of the shaft devices (22) and move the rotating bearings (16).

2. Device for storing and erecting an awning, especially for a street wendor's motor vehicle, as per claim 1), wherein to allow the complete re-enter of the cloth (14) into the housing seat (13) an additional collecting device is foreseen consisting of a mobile frame (23) connected with the fixed part (24) of the container box (4) on links (25); the lifting rotation of the frame (23) by means of two linear actuators (26) on links (27 and 28) brings the remaining part of the cloth (14) into the housing seat (13).

## Patentansprüche

1. Vorrichtung zum Verstauen und Ausfahren einer Markise, insbesondere für das Kraftfahrzeug eines Strassenhändlers, welche mit einem schachtelförmigen Kasten (4) versehen ist, welcher mit einer Stützstruktur (1) verbunden ist, die auf dem Dach des Kraftfahrzeuges aufgestellt ist, welcher mittels eines Lineartriebs (2) mit Gelenk (3) stufenweise geöffnet werden kann und welcher durch die Umdrehung mittels seines Scharniers (5) gehoben werden kann, und welche im Inneren des schachtelförmigen Kastens (4) mit einer Zeltbahn (14) versehen ist, die von zwei entgegenstellen Systeme der Stützstäbe (15) gestützt ist, die auf drehbaren Einstelleren (16) aufgestellet sind; dadurch gekennzeichnet, daß:
- der Deckel (6), der mittels eines Scharniers (7) mit dem Schachtelförmigen Kasten (4) gelenkig verbunden ist, ist durch zwei Spannstangen (8) mit Gelenke (9) geöffnet, welche den Deckel (6) stützen durch Gelenke (10) und welche höher auf dei Vorsprungen (11) eingesetzt sind;
- der Schachtelförmigen Kasten (4) lehnt auf der Platte (12) an, während der Deckel (6) außerhalb des Wirksamfeldes der Vorrichtung zum Verstauen eingesetzt ist, welcher in dem Lagernraum (13) angeordnet ist;
- die Zeltbahn (14) ist durch zwei Lineartriebe (18) mit Gelenke (19) in die Gebrauchlage geführt, welche, mittels Zahnradsstieles (20), die Zahnräder (21) der Wellevorrichtungen (22) leiten und die drehbaren Einstelleren (16) bewegen.

2. Vorrichtung zum Verstauen und Ausfahren einer Markise, insbesondere für das Kraftfahrzeug eines Strassenhändlers, nach Anspruch 1), wo, um die völlige Rückkehr der Zeltbahn (14) in Inneren des Lagernraumes (13) zu erlauben, es eine weitere Vorrichtung zum Verstauen gibt, die aus einem durch Gelenke (25) mit dem festen Teil (24) des Schachtelförmigen Kastens (4) zusammengefügten verstellbaren Gerüst (23) nach oben, welche durch zwei Lineartriebe (26) mit Gelenke (27) erlaubt wird, verstaut die restliche Teil der Zelthabn (14) in Inneren des Lagernraumes (13).

## Revendications

1. Dispositif pour stocker et ériger un auvent, en particulier pour un véhicule à moteur de marchand ambulant, et qui envisage, solidaire de l'embase de support (1) montée sur le toit du véhicule, un boîtier (4) s'ouvrant par degrés par l'intermédiaire d'un actionneur linéaire (2) sur le joint à rotule (3) qui place le boîtier (4) en elévation par la rotation de sa charnière à pivot (5) et qui, à l'intérieur du boîtier (4), loge une bâche (14) soutenue par deux systèmes opposés de longerons (15) installés sur des galets de roulement (16); caractérisé par le fait que:
- le capot (6), articulé au bôitier (4) par un élément à charnière (7) est ouvert par l'intermédiaire de deux treuils en forme de barre (8) sur des articulations (9) qui supportent le capot (6) sur des articulations (10) relévées au dessus sur les parties en saillie (11) du dispositif;
- le boîtier (4) appuie sur le socle de fixation (12) tandis que le capot (6) est placé hors du champ d'action du dispositif de stockage logé dans le siège du logement (13);
- le bâche (14) est transportée dans sa position d'emploi par l'intermédiaire de deux actionneurs linéaires (18) sur des articulations (19) qui, par des tiges à crémaillère (20), entrâinent les roues dentées (21) de dispositifs à arbre (22) et actionnent les galets de roulement (16).

2. Dispositif pour stocker et ériger un auvent, en particulier pour un véhicule à moteur de marchand ambulant, selon la revendication 1), où afin de permettre l'enroulement complet de la bâche (14) à l'intérieur du siège de logement (13) on a prévu un dispositif ultérieur d'enroulement se composant d'un longeron mobile (23) connecté à l'élément fixe (24) du boîtier (4) sur de articulations (25); la rotation en relevage du longeron (23) au moyen de deux actionneurs linéaires (26) sur les articulations (27) transporte la partie restante de la bâche (14) à l'intérieur du siège de logement (13).
